# EUROPEAN PATENT APPLICATION

(11) **EP 3 940 896 A1**
(43) Date of publication of application: **19.01.2022**
(21) Application number: 20770515.3
(22) Date of filing: 02.03.2020
(51) Int. Cl.: H01S 3/00, G02B 6/02, G02B 6/42

(54) **OPTICAL CONNECTOR AND LASER DEVICE PROVIDED WITH OPTICAL CONNECTOR**

(30) Priority: 11.03.2019 JP 2019043356
(71) Applicant: FUJIKURA LTD., Koto-ku Tokyo 135-8512 (JP)
(72) Inventor: SAKAMOTO, Akira, Sakura-shi, Chiba 285-8550 (JP); ENDO Tomohisa, Sakura-shi, Chiba 285-8550 (JP)
(74) Representative: Bardehle Pagenberg Partnerschaft mbB Patentanwälte Rechtsanwälte
(86) International application number: PCT/JP2020/008632
(87) International publication number: WO 2020/184248

(57) **Abstract**

The present invention provides an optical connector that can detect an optical feedback with a simple structure. The optical connector 30 has an enclosure 31 including a light propagation space S formed therein, a glass block 32 arranged at an end of the enclosure 31, an output beam fiber 15 extending from an exterior of the enclosure 31 through the light propagation space S so as to be connected directly or indirectly to the glass block 32, and an optical feedback fiber 17 extending from an interior of the light propagation space S to an exterior of the enclosure 31. The output beam fiber 15 includes a core 51 that allows an output laser beam L to propagate therethrough. The optical feedback fiber 17 includes a core 61 to which light propagating within the light propagation space S can be coupled.

## Description

### Technical Field

The present invention relates to an optical connector and a laser apparatus, and more particularly to a laser apparatus having an optical connector.

### Background Art

There has heretofore been known a laser apparatus capable of directing a laser beam generated by a laser light source, such as a fiber laser, through an optical connector to a workpiece to weld or cut the workpiece. In a process using such a laser apparatus, light including reflection light of a laser beam impinging on a workpiece and plasma light or infrared light generated at a process point, which may be hereinafter referred to as "optical feedback," may return to an optical connector. The intensity of such an optical feedback varies depending on process conditions and a process state at that time. Therefore, detection of changes in intensity of the optical feedback can make it possible to determine the quality of the processing and provide a feedback for the processing. In view of the above, there has been developed an optical connector including a core that allows a laser beam used for processing to propagate therethrough and a plurality of cores that allow an optical feedback to propagate therethrough, wherein an optical feedback propagating through those cores is detected by a photodetector provided within an enclosure of the optical connector (see, e.g., Patent Literature 1).

An optical fiber used in such a conventional optical connector includes a plurality of cores that allow an optical feedback to propagate therethrough, in addition to a core that allows a laser beam for processing to propagate therethrough. It is, however, difficult to produce such an optical fiber including a plurality of cores. Accordingly, there has been desired an optical connector capable of detecting an optical feedback with a simpler structure.

### Prior Art Literature

### Patent Literature

Patent Literature 1: JP 2018-004834 A

### Summary of the Invention

### Problem(s) to be Solved by the Invention

The present invention has been made in view of the above drawbacks in the prior art. It is, therefore, an object of the present invention to provide an optical connector and a laser apparatus that can detect an optical feedback with a simple structure.

### Means for Solving Problem(s)

According to a first aspect of the present invention, there is provided an optical connector that can detect an optical feedback with a simple structure. The optical connector has an enclosure including a light propagation space formed therein, a glass block arranged at an end of the enclosure, an output beam fiber extending from an exterior of the enclosure through the light propagation space so as to be connected directly or indirectly to the glass block, and at least one optical feedback fiber extending from an interior of the light propagation space to an exterior of the enclosure. The output beam fiber includes a core that allows an output laser beam to propagate therethrough and a cladding located around the core. The at least one optical feedback fiber includes a core to which light propagating within the light propagation space can be coupled.

According to a second aspect of the present invention, there is provided a laser apparatus that can detect an optical feedback with a simple structure. The laser apparatus has the aforementioned optical connector, at least one laser light source operable to generate the output laser beam, and at least one optical detection unit operable to detect an optical feedback that has entered the core of the at least one optical feedback fiber from the light propagation space of the optical connector. The at least one laser light source is connected to the output beam fiber of the optical connector.

### Brief Description of Drawings

Fig. 1 is a schematic diagram showing an overall configuration of a laser apparatus according to a first embodiment of the present invention.
Fig. 2 is a schematic cross-sectional view showing a configuration of an output beam fiber in the laser apparatus illustrated in Fig. 1.
Fig. 3 is a schematic cross-sectional view showing a configuration of an optical feedback fiber in the laser apparatus illustrated in Fig. 1.
Fig. 4 is a schematic cross-sectional view showing a configuration of an optical connector in the laser apparatus illustrated in Fig. 1.
Fig. 5 is a schematic cross-sectional view showing a configuration of an optical connector according to a second embodiment of the present invention.
Fig. 6 is a schematic cross-sectional view showing a configuration of an optical connector according to a third embodiment of the present invention.
Fig. 7 is a schematic diagram showing an overall configuration of a laser apparatus according to a fourth embodiment of the present invention.
Fig. 8 is a schematic cross-sectional view showing a configuration of an optical connector according to a fifth embodiment of the present invention.
Fig. 9 is a schematic cross-sectional view showing a variation of the optical connector illustrated in Fig. 8.
Fig. 10 is a schematic cross-sectional view showing a configuration of an optical connector according to a sixth embodiment of the present invention.
Fig. 11 is a schematic diagram showing an example of an overall configuration of a laser apparatus according to the sixth embodiment of the present invention.
Fig. 12 is a schematic cross-sectional view showing a configuration of an optical connector according to a seventh embodiment of the present invention.

### Mode(s) for Carrying Out the Invention

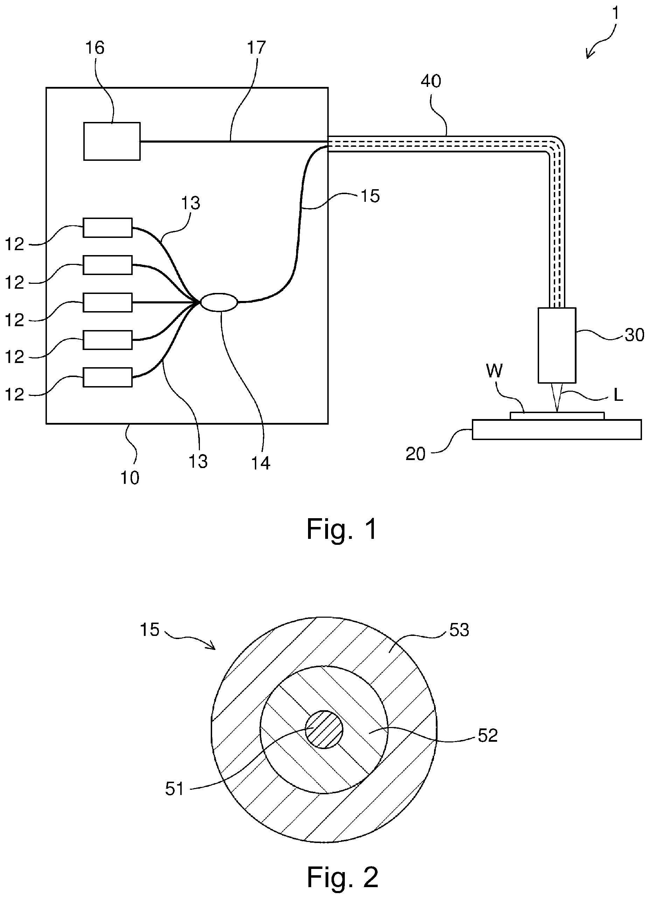

Embodiments of an optical connector and a laser apparatus according to the present invention will be described in detail below with reference to Figs. 1 to 12. In Figs. 1 to 12, the same or corresponding components are denoted by the same or corresponding reference numerals and will not be described below repetitively. Furthermore, in Figs. 1 to 12, the scales or dimensions of components may be exaggerated, or some components may be omitted.

Fig. 1 is a schematic diagram showing an overall configuration of a laser apparatus 1 according to a first embodiment of the present invention. As shown in Fig. 1, the laser apparatus 1 of the present embodiment includes an apparatus body 10, a stage 20 that holds a workpiece W, an optical connector 30 that directs an output laser beam L to the workpiece W placed on the stage 20, and a cable 40 connecting the optical connector 30 and the apparatus body 10 to each other. The laser apparatus 1 of the present embodiment is used to direct a high-power output laser beam L to the workpiece W so as to process a surface of the workpiece W. The present invention is applicable not only to such a laser apparatus, but also to various kinds of laser apparatuses.

The apparatus body 10 houses therein a plurality of laser light sources 12, an optical combiner 14 operable to combine laser beams from those laser light sources 12, and an optical detection unit 16 operable to detect an optical feedback including reflection light of the output laser beam L impinging on the workpiece W and plasma light or infrared light generated at or near a process point. Each of the laser light sources 12 is operable to generate an output laser beam having a predetermined wavelength (e.g., 1100 nm). For example, each of the laser light sources 12 can be formed of a fiber laser using a master oscillator power amplifier (MOPA) or a fiber laser using an optical resonator.

Each of the laser light sources 12 is connected to the optical combiner 14 by an optical fiber 13. Furthermore, an output beam fiber 15 is connected to the optical combiner 14. Thus, the optical combiner 14 and the optical connector 30 are connected to each other by the output beam fiber 15. As shown in Fig. 2, the output beam fiber 15 includes a core 51 that allows an output laser beam combined by the optical combiner 14 to propagate therethrough, a cladding 52 located around the core 51 with a refractive index lower than a refractive index of the core 51, and a covering 53 that surrounds a periphery of the cladding 52.

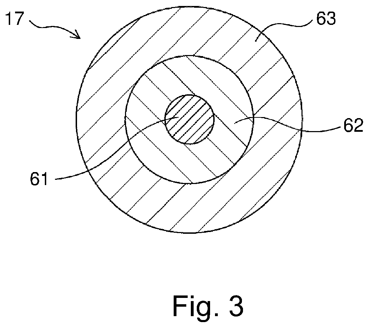

Moreover, an optical feedback fiber 17 is connected to the optical detection unit 16. Thus, the optical detection unit 16 and the optical connector 30 are connected to each other by the optical feedback fiber 17. As shown in Fig. 3, the optical feedback fiber 17 includes a core 61 that allows an optical feedback to propagate therethrough, a cladding 62 located around the core 61 with a refractive index lower than a refractive index of the core 61, and a covering 63 that surrounds a periphery of the cladding 62. For example, the core 61 of the optical feedback fiber 17 may be formed of pure silica, and fluorine may be added to the cladding 62 to decrease the refractive index of the cladding 62 from the refractive index of the core 61. Such an optical fiber is called a pure-silica-core fiber, which has a high light transmittance in an ultraviolet range of wavelengths. The output beam fiber 15 and the optical feedback fiber 17 are received within the cable 40 between the apparatus body 10 and the optical connector 30.

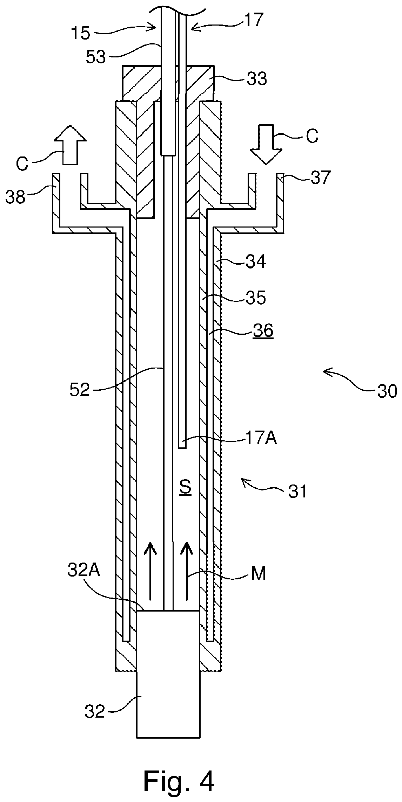

Fig. 4 is a schematic cross-sectional view showing an arrangement of the optical connector 30. As shown in Fig. 4, the optical connector 30 has an enclosure 31 with a double pipe structure, a glass block 32 disposed at a lower end of the enclosure 31, and a spacer 33 attached to an upper end of the enclosure 31. The output beam fiber 15 and the optical feedback fiber 17 extending from the apparatus body 10 extend through the spacer 33. For example, the glass block 32 may be formed of quartz having a cylindrical shape.

The enclosure 31 includes an outer wall 34 and an inner wall 35 arranged radially inside of the outer wall 34. A lower end and an upper end of the inner wall 35 in the enclosure 31 are sealed by the glass block 32 and the spacer 33, respectively. Thus, a light propagation space S is formed radially inside of the inner wall 35 within the enclosure 31.

When a high-power output laser beam L is outputted, the temperature of the optical connector 30 becomes high. Therefore, a cooling passage 36 is formed between the outer wall 34 and the inner wall 35 to circulate a cooling medium C (for example, cooling water) around the light propagation space S. The enclosure 31 has an inlet port 37 for introducing the cooling medium C into the cooling passage 36 and an outlet port 38 for discharging the cooling medium C from the cooling passage 36. Circulation of the cooling medium C through the cooling passage 36 can cool the enclosure 31 so as to suppress temperature increase of the enclosure 31 due to the output laser beam L. Therefore, the power of the output laser beam L emitted from the optical connector 30 can be increased.

As shown in Fig. 4, a portion of the covering 53 is removed from an end of the output beam fiber 15, so that a portion of the cladding 52 is exposed to the light propagation space S. An end face of the exposed cladding 52 (and the core 51) is connected to the glass block 32 by fusion splicing. With this configuration, the output laser beam that has propagated through the core 51 of the output beam fiber 15 enters the glass block 32 and transmits through the glass block 32. Then the output laser beam is concentrated to a surface of the workpiece W on the stage 20 by a condenser lens, which is not shown in the drawings. Thus, the output laser beam L is directed to the surface of the workpiece W to process (e.g., weld or cut) the surface of the workpiece W (see Fig. 1).

A portion of the output laser beam L impinging on the surface of the workpiece W is reflected by the workpiece W and introduced as reflection light into the light propagation space S from the glass block 32. When the output laser beam L transmits through high-temperature metal vapor (plume) produced by processing at the process point of the workpiece W, the plume is overheated to produce plasma light. Furthermore, infrared light is also produced by radiation. The plasma light and the infrared light also transmit through the glass block 32 and enter the light propagation space S from an end face 32A of the glass block 32. Thus, an optical feedback M such as the reflection light, the plasma light, and the infrared light propagates within the aforementioned light propagation space S in the enclosure 31.

It has been known that the intensity of the optical feedback M varies depending on process conditions and a process state, such as variations in power of the output laser beam L, a state of an assist gas, dirtiness of the surface of the workpiece W, compositional changes of the material being processed, variations of a gap between junctions being processed, and the like. Therefore, the current process conditions and process state can be grasped by detection of changes in intensity of the optical feedback, thereby making it possible to determine the quality of the laser processing and provide a feedback for the laser processing.

As shown in Fig. 4, the optical feedback fiber 17 has an end 17A located within the light propagation space S. The optical feedback fiber 17 extends from the interior of the light propagation space S to the apparatus body 10, which is external to the enclosure 31. The end face of the core 61 of the optical feedback fiber 17 is exposed to the light propagation space S. The optical feedback M that has transmitted through the glass block 32 and entered the light propagation space S can be coupled to the core 61 at its end face. The optical feedback M that has entered the core 61 of the optical feedback fiber 17 propagates through the core 61 and reaches the optical detection unit 16 of the apparatus body 10. In the optical detection unit 16, the intensity of the optical feedback M is detected by any known optical sensor. In order to improve the detection sensitivity to the optical feedback M at the optical detection unit 16, the diameter of the core 61 of the optical feedback fiber 17 is preferably greater than the diameter of the core 51 of the output beam fiber 15.

The present embodiment only requires that the output beam fiber 15 including the single core 51 be connected to the glass block 32 by fusion splicing. Therefore, an assembly operation for the optical connector 30 is facilitated as compared to an assembly operation for the aforementioned conventional optical connector. Furthermore, in the conventional optical connector, a photodetector for detecting an optical feedback is located within the enclosure of the optical connector. Therefore, the photodetector may become unable to withstand heat due to the high-power output laser beam. In the present embodiment, however, the optical detection unit 16 is provided external to the optical connector 30 (i.e., within the apparatus body 10). Therefore, the optical detection unit 16 is unlikely to be affected by heat due to the output laser beam.

Furthermore, in the conventional optical connector, an electric circuit including the photodetector needs to be housed within the enclosure of the optical connector, making it difficult to reduce the size of the optical connector. In the present embodiment, however, an optical feedback can be detected only by addition of a thin optical feedback fiber 17 to the optical connector 30. Accordingly, the size and weight of the optical connector 30 can be reduced.

Moreover, the conventional optical connector has a long electric path from the photodetector in the optical connector to a controller external to the optical connector. Therefore, a detection signal obtained by the photodetector is susceptible to noise until it reaches the controller. In the present embodiment, however, the optical feedback M is transmitted in the form of light from the optical connector 30 to the optical detection unit 16 of the apparatus body 10 and is thus insusceptible to noise.

The end face 32A of the glass block 32 may be roughened. For example, the end face 32A of the glass block 32 may be etched to form such a roughened surface. When the end face 32A of the glass block 32 is thus roughened, the optical feedback M is scattered at the end face 32A of the glass block 32. Therefore, the power density of the optical feedback M is unlikely to depend on locations. Accordingly, the detection sensitivity to the optical feedback M is prevented from varying depending on the location of the end 17A of the optical feedback fiber 17. Thus, the optical feedback M can be detected in a more stable manner.

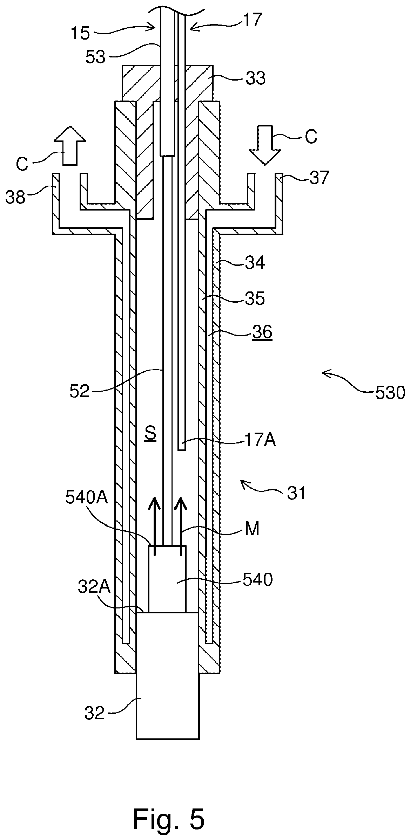

Fig. 5 is a schematic cross-sectional view showing an arrangement of an optical connector 530 according to a second embodiment of the present invention. In this embodiment, a bridge fiber 540 is connected between the output beam fiber 15 and the glass block 32. The output beam fiber 15 is connected to the glass block 32 via the bridge fiber 540. The bridge fiber 540 includes a core (not shown) optically coupled to the core 51 of the output beam fiber 15 and a cladding located around the core with a refractive index lower than the refractive index of the core. It is preferable for the core of the bridge fiber 540 to have the same diameter as the core 51 of the output beam fiber 15. The core of the bridge fiber 540 is optically coupled to the glass block 32. The outside diameter of the bridge fiber 540 (i.e., the outside diameter of the cladding) is greater than the outside diameter of the cladding 52 of the output beam fiber 15. The outside diameter of the bridge fiber 540 may be smaller than or equal to the outside diameter of the glass block 32.

With this configuration, when the optical feedback M enters the glass block 32, a major part of the optical feedback M is introduced into the bridge fiber 540 while a portion of the optical feedback M is introduced into the light propagation space S from the end face 32A of the glass block 32. Since the refractive index of air in the light propagation space S is lower than the refractive index of the bridge fiber 540, an air cladding is formed outside of the bridge fiber 540. Therefore, the optical feedback M that has entered the bridge fiber 540 propagates in an interior of the bridge fiber 540 so as to be emitted from an end face 540A of the bridge fiber 540 into the light propagation space S. Thus, the optical feedback M can be emitted into the light propagation space S from a location closer to the end 17A of the optical feedback fiber 17 than in the first embodiment. Accordingly, the intensity of the optical feedback M coupled to the core 61 of the optical feedback fiber 17 can be increased, resulting in an enhanced detection sensitivity to the optical feedback M in the optical detection unit 16.

Furthermore, when the outside diameter of the bridge fiber 540 is made smaller than the outside diameter of the glass block 32, the optical intensity of light emitted from the end face 540A of the bridge fiber 540 per unit area can readily be increased to be higher than the optical intensity of light emitted from the end face of the glass block 32 of the first embodiment per unit area. Therefore, the intensity of the optical feedback M coupled to the core 61 of the optical feedback fiber 17 can readily be increased.

In this case, the end face 540A of the bridge fiber 540 may be roughened. For example, the end face 540A of the bridge fiber 540 may be etched to form such a roughened surface. When the end face 540A of the bridge fiber 540 is thus roughened, the optical feedback M is scattered at the end face 540A of the bridge fiber 540. Therefore, the power density of the optical feedback M is unlikely to depend on locations. Accordingly, the detection sensitivity to the optical feedback M is prevented from varying depending on the location of the end 17A of the optical feedback fiber 17. Thus, the optical feedback M can be detected in a more stable manner.

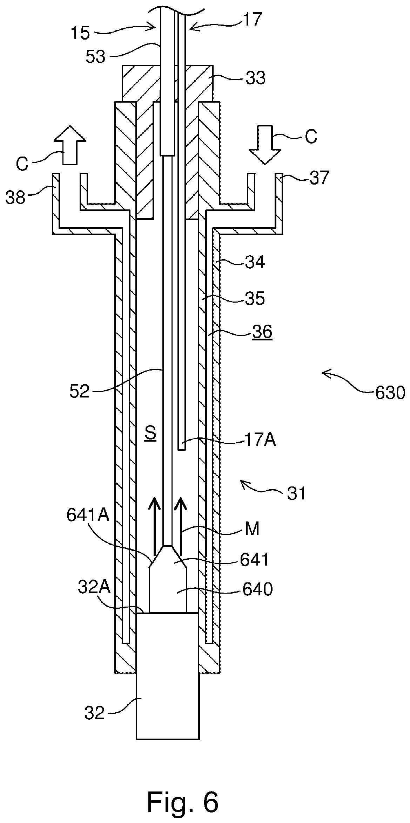

Fig. 6 is a schematic cross-sectional view showing an arrangement of an optical connector 630 according to a third embodiment of the present invention. In this embodiment, a bridge fiber 640 is connected between the output beam fiber 15 and the glass block 32 as with the second embodiment. The output beam fiber 15 is connected to the glass block 32 via the bridge fiber 640. The bridge fiber 640 includes a core (not shown) optically coupled to the core 51 of the output beam fiber 15 and a cladding located around the core with a refractive index lower than the refractive index of the core. It is preferable for the core of the bridge fiber 640 to have the same diameter as the core 51 of the output beam fiber 15. The core of the bridge fiber 640 is optically coupled to the glass block 32.

The bridge fiber 640 has a taper portion 641 having outside diameters gradually increasing from a portion connected to the cladding 52 of the output beam fiber 15 toward the glass block 32. The maximum outside diameter of the bridge fiber 640 (i.e., the outside diameter of the cladding at a portion where the bridge fiber 640 is connected to the glass block 32) is greater than the outside diameter of the cladding 52 of the output beam fiber 15. The maximum outside diameter of the bridge fiber 640 may be smaller than or equal to the outside diameter of the glass block 32.

With this configuration, a major part of the optical feedback M that has entered the glass block 32 propagates through the bridge fiber 540 as with the second embodiment so as to be emitted from a taper surface 641A of the taper portion 641 in the bridge fiber 640 into the light propagation space S. In the present embodiment, thus, the optical feedback M can be emitted into the light propagation space S from a location closer to the end 17A of the optical feedback fiber 17 than in the first embodiment. Accordingly, the intensity of the optical feedback M coupled to the core 61 of the optical feedback fiber 17 can be increased, resulting in an enhanced detection sensitivity to the optical feedback M in the optical detection unit 16.

Furthermore, when the maximum outside diameter of the bridge fiber 640 is made smaller than the outside diameter of the glass block 32, the optical intensity of light emitted from the taper surface 641A of the taper portion 641 of the bridge fiber 640 per unit area can readily be increased to be higher than the optical intensity of light emitted from the end face of the glass block 32 of the first embodiment per unit area. Therefore, the intensity of the optical feedback M coupled to the core 61 of the optical feedback fiber 17 can readily be increased.

In this case, the taper surface 641A of the bridge fiber 640 may be roughened. For example, the taper surface 641A of the bridge fiber 640 may be etched to form such a roughened surface. When the taper surface 641A as an end face of the bridge fiber 640 is thus roughened, the optical feedback M is scattered at the taper surface 641A of the bridge fiber 640. Therefore, the power density of the optical feedback M is unlikely to depend on locations. Accordingly, the detection sensitivity to the optical feedback M is prevented from varying depending on the location of the end 17A of the optical feedback fiber 17. Thus, the optical feedback M can be detected in a more stable manner.

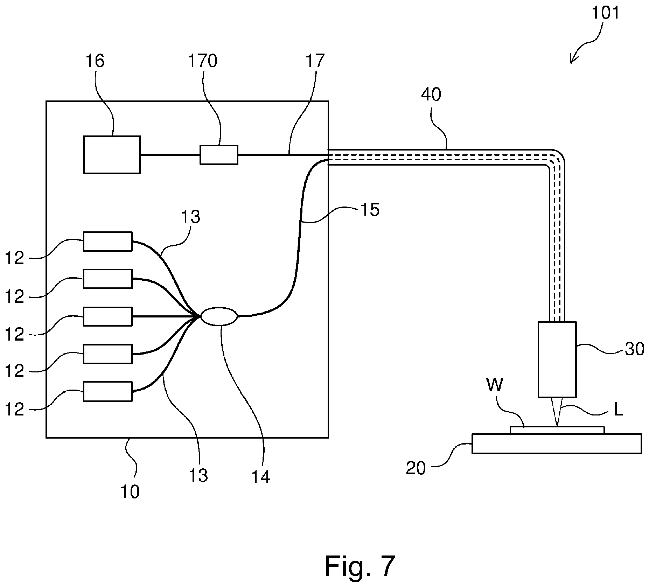

Fig. 7 is a schematic diagram showing an overall configuration of a laser apparatus 101 according to a fourth embodiment of the present invention. The laser apparatus 101 of the present embodiment includes an optical filter unit 170 arranged on the optical feedback fiber 17 between the optical connector 30 and the optical detection unit 16 within the apparatus body 10. The optical filter unit 170 is configured to separate light having a predetermined wavelength from an optical feedback M propagating through the core 61 of the optical feedback fiber 17. For example, such an optical filter unit 170 is used to separate light having a wavelength to be detected from the optical feedback M and detect the separated light, so that only light having a specific wavelength that is likely to reflect desired process conditions or process state can be extracted and detected. Therefore, the process conditions or process state can be grasped with higher precision, so that a more detailed process control can be implemented. Examples of light extracted by the optical filter unit 170 include visible light (having wavelengths of 380 nm to 750 nm), ultraviolet light (having wavelengths less than 380 nm), infrared light (having wavelengths greater than 750 nm), stimulated Raman light, and the like. Particularly, if ultraviolet light is to be extracted by the optical filter unit 170, it is preferable to use the aforementioned pure-silica-core fiber (e.g., having a core diameter of at least 100 µm) for the optical feedback fiber 17.

Furthermore, the optical filter unit 170 may separate a plurality of wavelengths of light (for example, ultraviolet light, infrared light, and reflection light) from the optical feedback M. In this case, a plurality of light receiving elements (sensors) may be provided in the optical detection unit 16 so that the separated wavelengths of light are detected simultaneously by those light receiving elements.

Moreover, the optical filter unit 170 may be configured to separate light having the same wavelength as the output laser beam L from the optical feedback M. When a wavelength component of the output laser beam L is thus removed from the optical feedback M by the optical filter unit 170, influence of parameters of the output laser beam L (power density or the like) on the optical feedback M can be reduced so as to achieve more precise detection.

In the example illustrated in Fig. 7, the optical filter unit 170 is provided within the apparatus body 10. Nevertheless, instead of the optical filter unit 170, an optical filter formed of a multilayered dielectric film may be attached to the end 17A of the optical feedback fiber 17.

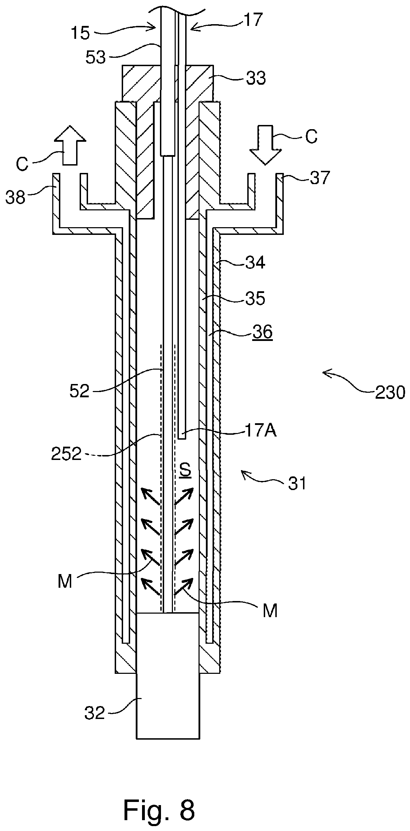

Fig. 8 is a schematic cross-sectional view showing an arrangement of an optical connector 230 according to a fifth embodiment of the present invention. In this embodiment, a surface 252 of the cladding 52 of the output beam fiber 15 exposed within the light propagation space S is roughened. For example, the surface 252 of the cladding 52 may be etched to form such a roughened surface.

With this configuration, a portion of the optical feedback M transmits through the glass block 32 and directly enters the light propagation space S as with the first embodiment. Another portion of the optical feedback M is introduced into the cladding 52 of the output beam fiber 15 from the glass block 32 and scattered into the light propagation space S at the surface 252 of the cladding 52 as indicated by arrows in Fig. 8. Therefore, a larger quantity of the optical feedback M propagates within the light propagation space S as compared to the optical connector 30 of the first embodiment. Thus, a larger quantity of the optical feedback M can be coupled to the core 61 of the optical feedback fiber 17. Accordingly, the optical feedback M can be detected with higher precision.

Furthermore, since the surface 252 of the cladding 5 is roughened in the present embodiment, the optical feedback M is scattered on the surface 252 of the cladding 52. As a result, the power density of the optical feedback M is unlikely to depend on locations. Accordingly, the detection sensitivity to the optical feedback M is prevented from varying depending on the location of the end 17A of the optical feedback fiber 17. Thus, the optical feedback M can be detected in a more stable manner.

Instead of the roughened surface 252 of the cladding 52, for example, the light propagation space S may be filled with a resin having a refractive index higher than that of the cladding 52. Such a resin preferably has an excellent heat resistance. When the light propagation space S is filled with such a resin, a portion of the optical feedback M propagating through the cladding 52 of the output beam fiber 15 is allowed to enter the resin and then to enter the core 61 of the optical feedback fiber 17.

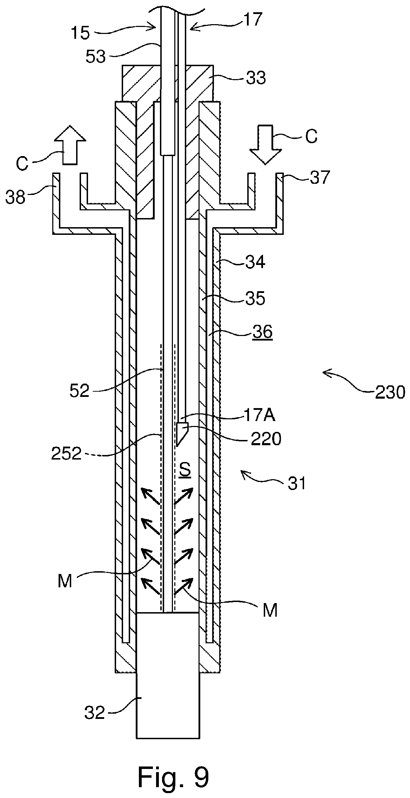

Furthermore, the end face of the core 61 of the optical feedback fiber 17 may be exposed to the light propagation space S so that a portion of the optical feedback M propagating within the light propagation space S is coupled to the core 61 as in the present embodiment. For example, however, as shown in Fig. 9, a cap member 220 may be attached to the end 17A of the optical feedback fiber 17 to introduce the optical feedback M propagating within the light propagation space S into the core 61 of the optical feedback fiber 17. In the example illustrated in Fig. 9, the cap member 220 has an inclined surface to couple the optical feedback M that has been scattered at the cladding 52 of the output beam fiber 15 to the core 61 of the optical feedback fiber 17.

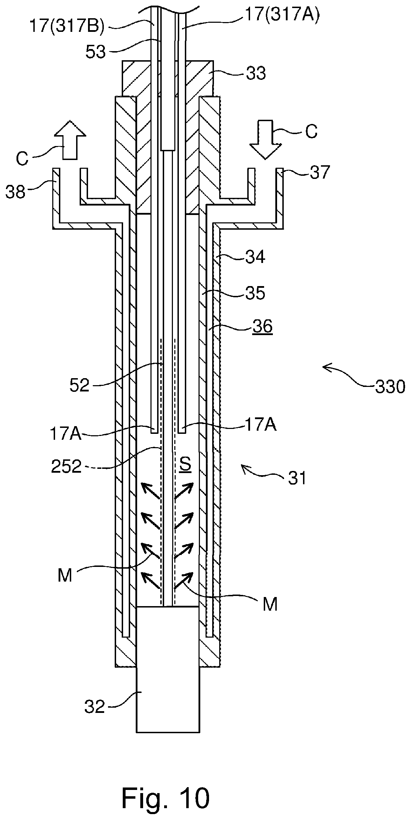

Fig. 10 is a schematic cross-sectional view showing an arrangement of an optical connector 330 according to a sixth embodiment of the present invention. The first to fifth embodiments describe an example in which one optical feedback fiber 17 is provided in the optical connector. Nevertheless, the number of the optical feedback fiber 17 is not limited to one. As in the present embodiment, two or more optical feedback fibers 17 (317A, 317B) may be provided in the optical connector 330. When the optical feedback M from a plurality of optical feedback fibers 317A and 317B is thus detected by the optical detection unit 16, the detection sensitivity of the optical feedback M can be improved so that the process conditions and the process state can be grasped with higher precision.

Furthermore, for example, inclination of the surface of the workpiece W impinged by the output laser beam L or inclination of the optical connector 330 changes a position where the optical feedback M is generated. In this case, the optical intensity of the optical feedback M may vary depending on locations within the light propagation space S. Therefore, when the ends 17A of a plurality of optical feedback fibers 317A and 317B are arranged at a plurality of locations within the light propagation space S, the optical intensities of the optical feedback M that correspond to those locations can be detected within the light propagation space S. Thus, the process conditions and the process state can be grasped with higher precision.

In the present embodiment, the ends 17A of the two optical feedback fibers 317A and 317B are arranged at the same location in the axial direction. In other words, the cores of the optical feedback fibers 317A and 317B exposed to the light propagation space S are arranged at the same location in the axial direction. This arrangement allows the optical intensity distribution of the optical feedback M on a plane perpendicular to the axial direction within the light propagation space S to be grasped by the two optical feedback fibers 17. Accordingly, for example, when the optical feedback M from those optical feedback fibers 317A and 317B is detected by the optical detection unit 16, an angular component of the optical feedback M or the like can be detected. In this case, the ends 17A of the optical feedback fibers 317A and 317B may be arranged on concentric circles.

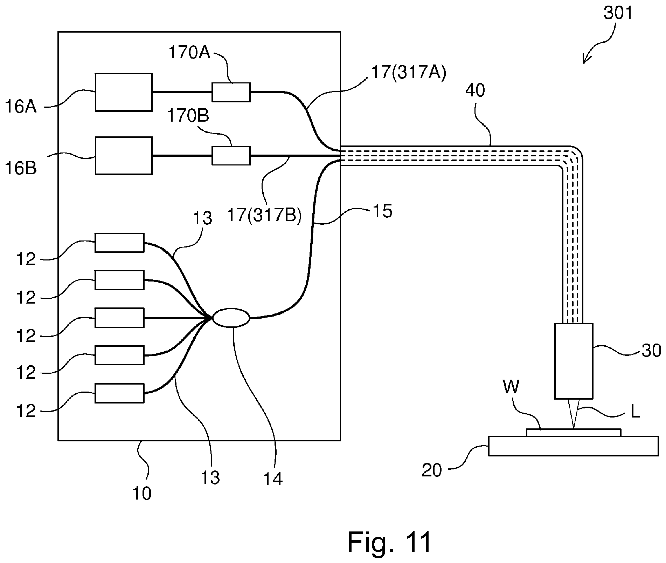

In this case, as shown in Fig. 11, optical detection units 16A and 16B and optical filter units 170A and 170B may be provided so as to correspond to the respective optical feedback fibers 317A and 317B. Those optical filter units 170A and 170B may be configured to separate light having different wavelengths from each other. In this case, light having different wavelengths can be separated by a plurality of optical filter units 170A and 170B, so that different wavelength components of the optical feedback can be detected by the optical detection unit 16A and 16B, respectively. Therefore, for example, when a ratio of outputs of the optical detection units 16A and 16B is calculated by an arithmetic unit, which is not shown in the drawings, a wavelength spectrum of the optical feedback can be obtained.

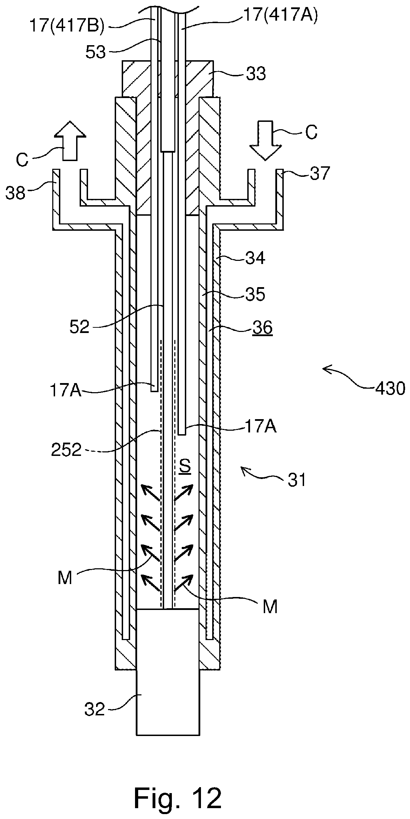

Fig. 12 is a schematic cross-sectional view showing an arrangement of an optical connector 430 according to a seventh embodiment of the present invention. In this embodiment, the cores of the optical feedback fibers 417A and 417B exposed to the light propagation space S are arranged at different locations in the axial direction, unlike the aforementioned sixth embodiment. This arrangement allows the optical intensity distribution of the optical feedback M in the axial direction within the light propagation space S to be grasped. Thus, for example, when the optical feedback M from those optical feedback fibers 417A and 147B is detected by the optical detection unit 16, the concentration state of the optical feedback M or the like can be detected.

In the optical feedback fibers of the aforementioned embodiments, the core through which the optical feedback propagates is covered with the cladding. Nevertheless, the core through which the optical feedback propagates may not necessarily be covered with the cladding.

The terms "upper" and "lower" and other positional terms described herein are used in connection with the illustrated embodiments and may be varied depending on the relative positional relationship between components of the apparatus.

Although some preferred embodiments of the present invention have been described, the present invention is not limited to the aforementioned embodiments. It should be understood that various different forms may be applied to the present invention within the technical idea thereof.

As described above, according to a first aspect of the present invention, there is provided an optical connector that can detect an optical feedback with a simple structure. The optical connector has an enclosure including a light propagation space formed therein, a glass block arranged at an end of the enclosure, an output beam fiber extending from an exterior of the enclosure through the light propagation space so as to be connected directly or indirectly to the glass block, and at least one optical feedback fiber extending from an interior of the light propagation space to an exterior of the enclosure. The output beam fiber includes a core that allows an output laser beam to propagate therethrough and a cladding located around the core. The at least one optical feedback fiber includes a core to which light propagating within the light propagation space can be coupled.

With this configuration, an optical feedback including reflection light of an output laser beam impinging on a workpiece and plasma light or infrared light generated at a process point is introduced into the light propagation space through the glass block. The optical feedback enters the core of the optical feedback fiber from an end of the optical feedback fiber, which is located within the light propagation space. Therefore, the optical feedback propagating through the core of the optical feedback fiber can be detected simply by connecting a photodetector to the optical feedback fiber of the optical connector. Thus, the optical feedback can be detected with a simple structure.

The output beam fiber may further include a covering surrounding a periphery of the cladding. In this case, a portion of the covering of the output beam fiber may be removed within the light propagation space so that the cladding is exposed to the light propagation space. With this configuration, a portion of the optical feedback transmits through the glass block and directly enters the light propagation space. Another portion of the optical feedback is introduced into the cladding of the output beam fiber from the glass block and is thus introduced into the light propagation space from a surface of the cladding. Therefore, a larger quantity of the optical feedback can be introduced into the core of the optical feedback fiber, so that the optical feedback can be detected with higher precision.

In this case, a surface of the cladding exposed to the light propagation space may be roughened. When the surface of the cladding is roughened, the optical feedback can be scattered at the surface of the cladding. Therefore, the power density of the optical feedback is unlikely to depend on locations. Accordingly, the detection sensitivity to the optical feedback is prevented from varying depending on the location of the end of the optical feedback fiber. Thus, the optical feedback can be detected in a more stable manner.

The optical connector may further have a bridge fiber connected between the output beam fiber and the glass block. The bridge fiber has a maximum outside diameter that is greater than an outside diameter of the cladding of the output beam fiber. The bridge fiber may include a taper portion having outside diameters gradually increasing from a portion connected to the output beam fiber toward the glass block. With such a bridge fiber, a major part of the optical feedback that has entered the glass block propagates in an interior of the bridge fiber so as to be emitted from a location closer to the end of the optical feedback fiber into the light propagation space. Therefore, the intensity of the optical feedback coupled to the core of the optical feedback fiber cane be increased, resulting in an enhanced detection sensitivity to the optical feedback.

Furthermore, when the maximum outside diameter of the bridge fiber is made smaller than the outside diameter of the glass block, the optical intensity of light emitted from the bridge fiber per unit area can readily be increased. Therefore, the intensity of the optical feedback coupled to the core of the optical feedback fiber can readily be increased.

In order to improve the detection sensitivity to the optical feedback, the core of the at least one optical feedback fiber preferably has a diameter that is greater than a diameter of the core of the output beam fiber.

The at least one optical feedback fiber may include a plurality of optical feedback fibers. When the optical feedback from a plurality of optical feedback fibers is detected, the detection sensitivity of the optical feedback can be improved while the optical intensities of the optical feedback that correspond to locations of the optical feedback fibers can be detected within the light propagation space.

In this case, the cores of the plurality of optical feedback fibers may have ends arranged at the same position in an axial direction within the light propagation space. This arrangement allows the optical intensity distribution of the optical feedback on a plane perpendicular to the axial direction within the light propagation space to be grasped by the plurality of optical feedback fibers. Alternatively, the cores of the plurality of optical feedback fibers may have ends arranged at different positions in an axial direction within the light propagation space. This arrangement allows the optical intensity distribution of the optical feedback in the axial direction within the light propagation space to be grasped by the plurality of optical feedback fibers.

The optical connector may further have a plurality of optical filter units provided so as to correspond to the plurality of optical feedback fibers. The plurality of optical feedback fibers may be configured to separate light having different wavelengths from the optical feedback propagating through the cores of the plurality of optical feedback fibers. With this configuration, different wavelength components of the optical feedback can be detected. Therefore, calculation of a ratio of outputs detected at respective wavelengths allows a wavelength spectrum of the optical feedback to be obtained.

The optical connector may further have at least one optical filter unit operable to separate light having a predetermined wavelength from the optical feedback propagating through the core of the at least one optical feedback fiber. When such an optical filter unit is used to separate light having a wavelength to be detected from the optical feedback and detect the separated light, only light having a specific wavelength that is likely to reflect desired process conditions or process state can be extracted and detected. Therefore, a more detailed process control can be implemented.

Furthermore, the at least one optical filter unit may be configured to separate light having the same wavelength as the output laser beam from the optical feedback. When a wavelength component of the output laser beam is thus removed from the optical feedback, influence of parameters of the output laser beam (power density or the like) on the optical feedback can be reduced so as to achieve more precise detection. The at least one optical filter unit may be attached to an end of the at least one optical feedback fiber.

It is preferable for the enclosure to have a cooling passage for circulating a cooling medium around the light propagation space. Such circulation of the cooling medium through the cooling passage can cool the enclosure so as to suppress temperature increase of the enclosure due to the output laser beam. Therefore, the power of the output laser beam emitted from the optical connector can be increased.

The at least one optical feedback fiber may be formed of a fiber having a high light transmittance in an ultraviolet range of wavelengths. It is preferable to use such a fiber particularly if light having a wavelength in an ultraviolet range is to be detected from the optical feedback.

According to a second aspect of the present invention, there is provided a laser apparatus that can detect an optical feedback with a simple structure. The laser apparatus has the aforementioned optical connector, at least one laser light source operable to generate the output laser beam, and at least one optical detection unit operable to detect an optical feedback that has entered the core of the at least one optical feedback fiber from the light propagation space of the optical connector. The at least one laser light source is connected to the output beam fiber of the optical connector.

With this configuration, the optical feedback propagating through the core of the optical feedback fiber can be detected simply by connecting a photodetector to the optical feedback fiber of the aforementioned optical connector. Thus, the optical feedback can be detected with a simple structure.

Furthermore, the at least one optical feedback fiber of the optical connector may include a plurality of optical feedback fibers. The at least one optical detection unit may include a plurality of optical detection units operable to detect optical feedbacks that have entered the respective cores of the plurality of optical feedback fibers.

According to the present invention, an optical feedback including reflection light of an output laser beam impinging on a workpiece and plasma light or infrared light generated at a process point is introduced into the light propagation space through the glass block. The optical feedback enters the core of the optical feedback fiber from an end of the optical feedback fiber located within the light propagation space. Therefore, the optical feedback propagating through the core of the optical feedback fiber can be detected simply by connecting a photodetector to the optical feedback fiber of the optical connector. Thus, the optical feedback can be detected with a simple structure.

This application claims the benefit of priority from Japanese patent application No. 2019-043356, filed on March 11, 2019, the disclosure of which is incorporated herein in its entirety by reference.

### Industrial Applicability

The present invention is suitably used for a laser apparatus having an optical connector.

### Description of Reference Numerals and Signs

- 1, 101,301: Laser apparatus
- 10: Apparatus body
- 12: Laser light source
- 14: Optical combiner
- 15: Output beam fiber
- 16: Optical detection unit
- 17, 317A, 317B, 417A, 417B: Optical feedback fiber
- 20: Stage
- 30, 230, 330, 430, 530, 630: Optical connector
- 31: Enclosure
- 32: Glass block
- 33: Spacer
- 34: Outer wall
- 35: Inner wall
- 36: Cooling passage
- 37: Inlet port
- 38: Outlet port
- 40: Cable
- 51: Core
- 52: Cladding
- 53: Covering
- 61: Core
- 62: Cladding
- 63: Covering
- 170: Optical filter unit
- 220: Cap member
- C: Cooling medium
- L: Output laser beam
- M: Optical feedback
- S: Light propagation space
- W: Workpiece

## Claims

1. An optical connector comprising:
an enclosure including a light propagation space formed therein;
a glass block arranged at an end of the enclosure;
an output beam fiber extending from an exterior of the enclosure through the light propagation space so as to be connected directly or indirectly to the glass block, the output beam fiber including a core that allows an output laser beam to propagate therethrough and a cladding located around the core; and
at least one optical feedback fiber extending from an interior of the light propagation space to an exterior of the enclosure, the at least one optical feedback fiber including a core to which light propagating within the light propagation space can be coupled.

2. The optical connector as claim 1, wherein the output beam fiber further includes a covering surrounding a periphery of the cladding, and
a portion of the covering of the output beam fiber is removed within the light propagation space so that the cladding is exposed to the light propagation space.

3. The optical connector as claim 2, wherein a surface of the cladding exposed to the light propagation space is roughened.

4. The optical connector as recited in any one of claims 1 to 3, further comprising a bridge fiber connected between the output beam fiber and the glass block, the bridge fiber having a maximum outside diameter that is greater than an outside diameter of the cladding of the output beam fiber.

5. The optical connector as recited in claim 4, wherein the bridge fiber includes a taper portion having outside diameters gradually increasing from a portion connected to the output beam fiber toward the glass block.

6. The optical connector as recited in any one of claims 1 to 5, wherein the core of the at least one optical feedback fiber has a diameter that is greater than a diameter of the core of the output beam fiber.

7. The optical connector as recited in any one of claims 1 to 6, wherein the at least one optical feedback fiber includes a plurality of optical feedback fibers.

8. The optical connector as recited in claim 7, wherein the cores of the plurality of optical feedback fibers have ends arranged at a same position in an axial direction within the light propagation space.

9. The optical connector as recited in claim 7, wherein the cores of the plurality of optical feedback fibers have ends arranged at different positions in an axial direction within the light propagation space.

10. The optical connector as recited in any one of claims 7 to 9, further comprising a plurality of optical filter units provided so as to correspond to the plurality of optical feedback fibers, the plurality of optical filter units being operable to separate light having different wavelengths from the optical feedback propagating through the cores of the plurality of optical feedback fibers.

11. The optical connector as recited in any one of claims 1 to 10, further comprising at least one optical filter unit operable to separate light having a predetermined wavelength from the optical feedback propagating through the core of the at least one optical feedback fiber.

12. The optical connector as recited in claim 11, wherein the at least one optical filter unit is configured to separate light having a same wavelength as the output laser beam from the optical feedback.

13. The optical connector as recited in claim 11 or 12, wherein the at least one optical filter unit is attached to an end of the at least one optical feedback fiber.

14. The optical connector as recited in any one of claims 1 to 13, wherein the enclosure has a cooling passage for circulating a cooling medium around the light propagation space.

15. The optical connector as recited in any one of claims 1 to 14, wherein the at least one optical feedback fiber is formed of a fiber having a high light transmittance in an ultraviolet range of wavelengths.

16. A laser apparatus comprising:
the optical connector as recited in any one of claims 1 to 15;
at least one laser light source operable to generate the output laser beam, the at least one laser light source being connected to the output beam fiber of the optical connector; and
at least one optical detection unit operable to detect an optical feedback that has entered the core of the at least one optical feedback fiber from the light propagation space of the optical connector.

17. The laser apparatus as recited in claim 16, wherein the at least one optical feedback fiber of the optical connector includes a plurality of optical feedback fibers,
wherein the at least one optical detection unit includes a plurality of optical detection units operable to detect optical feedbacks that have entered the respective cores of the plurality of optical feedback fibers.
